# DEMANDE DE BREVET EUROPEEN

(11) **EP 4 579 098 A1**
(43) Date de publication de la demande: **02.07.2025**
(21) Numéro de dépôt: 24220818.9
(22) Date de dépôt: 17.12.2024
(51) Int. Cl.: F16D 13/64, F16F 15/121

(54) **AMORTISSEUR DE TORSION ET DISQUE D EMBRAYAGE**

(30) Priorité: 31.12.2023 FR 2315554
(71) Demandeur: VALEO EMBRAYAGES, 80009 Amiens (FR)
(72) Inventeur: DUBOIS, Bernard, 80009 Amiens (FR); BOUDIN, Jerome, 80009 Amiens (FR); FARINEAUX, Paul, 80009 Amiens (FR)
(74) Mandataire: Valeo Powertrain Systems

(57) **Abrégé**

Amortisseur de torsion (100), destiné à équiper un groupe motopropulseur de véhicule, l'amortisseur comprenant :
- un premier élément (1) mobile en rotation autour d'un axe (X) de rotation,
- un deuxième élément mobile en rotation par rapport au premier élément (1) selon l'axe (X) de rotation,
le deuxième élément comprenant une première rondelle latérale et une deuxième rondelle latérale montées solidaire en rotations autour de l'axe (X) et espacées axialement l'une de l'autre et le premier élément (1) comprenant un disque intermédiaire disposé axialement entre la première et la deuxième rondelle latérale,
- des ressorts montés entre le premier élément (1) et le deuxième élément de façon à se comprimer pour autoriser une rotation relative selon l'axe (X) entre le premier élément (1) et le deuxième élément,
- un premier dispositif de frottement (10a) comprenant une première rondelle de frottement (11a) dotée d'au moins une portion de fixation (12) fixée de façon rigide en rotation sur le premier élément (1) ou sur le deuxième élément, la première rondelle de frottement (11a) ayant une portion de frottement (15) agencé entre la première rondelle latérale et le premier élément (1); et une première rondelle élastique (18a) agencée axialement entre le premier élément (1) et la portion de frottement (15) de la première rondelle de frottement,
- un deuxième dispositif de frottement (10b) comprenant une deuxième rondelle de frottement (11b) dotée d'au moins une portion de fixation (12) fixée de façon rigide en rotation sur le premier élément (1) ou sur le deuxième élément, la deuxième rondelle de frottement (11b) ayant une portion de frottement (15) agencé entre la deuxième rondelle latérale et le premier élément (1); et une deuxième rondelle élastique (18b) agencée axialement entre le premier élément (1) et la portion de frottement (15) de la deuxième rondelle de frottement.

## Description

L'invention se rapporte à un amortisseur de torsion pour un groupe motopropulseur de véhicule. Plus précisément, l'invention est destinée aux disques d'embrayages de véhicules, par exemple pour des camions.

### ÉTAT DE LA TECHNIQUE ANTÉRIEURE

Un disque d'embrayage comprend traditionnellement un disque de friction avec un axe X de rotation, doté de garnitures de friction, un moyeu configuré pour entrainer en rotation selon cet axe X un arbre d'entrée de boite de vitesse et un amortisseur de torsion agencé cinématiquement entre le disque de friction et le moyeu. Un amortisseur de torsion comprend traditionnellement des ressorts intercalés entre un premier élément et un deuxième élément de l'amortisseur pour se comprimer en autorisant une rotation relative entre le premier élément et le deuxième élément selon l'axe X de rotation et un dispositif de frottement configuré pour dissiper par frottement l'énergie stockée dans les ressorts.

Pour ce faire, les dispositifs de frottement utilisés dans les disques d'embrayage comportent généralement des rondelles de frottement qui sont arrêtées en rotation sur le premier élément de l'amortisseur grâce à des éléments de couplage tels que des dentures ou cannelures, ou à des pattes repliées qui sont insérées dans des fentes complémentaires du premier élément.

De tels dispositifs de frottement présentent l'avantage d'autoriser un déplacement axial de la rondelle de frottement, le long de l'axe X, au fur et à mesure que les pièces de frottement s'amincissent en raison de l'usure.

Néanmoins, pour autoriser un déplacement axial de la rondelle de frottement par rapport au premier élément, les éléments de couplage précités (dentures, cannelures, pattes) doivent coopérer avec un jeu angulaire minimal. En l'absence de jeu angulaire, le déplacement axial de la rondelle de frottement serait difficile voire impossible en raison des frottements axiaux entre les dents / cannelures...

La présence d'un jeu angulaire signifie que la rondelle de frottement et le premier élément ne sont pas rigoureusement solidaires en rotation l'un de l'autre, d'autant plus que des phénomènes de matage entre ces éléments de couplage ont tendance à amplifier le jeu angulaire initial au fur et à mesure du fonctionnement du dispositif de frottement. En effet, les vibrations passant dans l'amortisseur engendrent des chocs entre les éléments de couplage précités et le composant support. Le niveau de choc est tel qu'il est possible de mater ou de cisailler ces éléments de couplage.

Ceci peut conduire à une usure prématurée et à des performances réduites du dispositif de frottement.

### EXPOSÉ DE L'INVENTION

L'amortisseur selon l'invention a pour objectif de résoudre les problèmes techniques posés par l'art antérieur en supprimant définitivement les problèmes de matage tout en proposant une solution à un coût réduit.

Ce but est atteint, selon l'invention, au moyen d'un amortisseur de torsion destiné à équiper un groupe motopropulseur de véhicule, l'amortisseur comprenant :
- un premier élément mobile en rotation autour d'un axe X de rotation,
- un deuxième élément mobile en rotation par rapport au premier élément selon l'axe X de rotation,
   le deuxième élément comprenant une première rondelle latérale et une deuxième rondelle latérale montées solidaire en rotations autour de l'axe et espacées axialement l'une de l'autre et le premier élément comprenant un disque intermédiaire disposé axialement entre la première et la deuxième rondelle latérale,
- des ressorts montés entre le premier élément et le deuxième élément de façon à se comprimer pour autoriser une rotation relative selon l'axe X entre le premier élément et le deuxième élément,
- un premier dispositif de frottement comprenant une première rondelle de frottement dotée d'au moins une portion de fixation fixée de façon rigide en rotation sur le premier élément ou sur le deuxième élément, la première rondelle de frottement ayant une portion de frottement agencé entre la première rondelle latérale et le premier élément; et une première rondelle élastique agencée axialement entre le premier élément et la portion de frottement de la première rondelle de frottement,
- un deuxième dispositif de frottement comprenant une deuxième rondelle de frottement dotée d'au moins une portion de fixation fixée de façon rigide en rotation sur le premier élément ou sur le deuxième élément, la deuxième rondelle de frottement ayant une portion de frottement agencé entre la deuxième rondelle latérale et le premier élément ; et une deuxième rondelle élastique agencée axialement entre le premier élément et la portion de frottement de la deuxième rondelle de frottement.

Ainsi, on peut réaliser un blocage en rotation entre le premier ou le deuxième élément et les deux rondelles de frottement, sans jeu angulaire, tout en autorisant un déplacement de la portion de frottement par rapport audit premier ou deuxième élément, ce qui permet de compenser les usures des surfaces de frottement et de supprimer les problèmes de matage. En outre, le placement d'un dispositif de frottement de part et d'autre du premier élément permet d'obtenir un système plus souple, les deux rondelles élastiques subissant indépendamment les battements axiaux passant dans l'amortisseur. L'amortisseur selon l'invention voit ainsi sa durée de vie augmenter.

L'amortisseur peut comprendre une ou plusieurs des caractéristiques suivantes :
La première rondelle de frottement et la deuxième rondelle de frottement sont identiques et positionnées symétriquement par rapport au premier élément. Ainsi, l'amortisseur est simple et peu coûteux à réaliser du fait de la standardisation des pièces.

La première rondelle élastique et la deuxième rondelle élastique sont identiques et positionnées symétriquement par rapport au premier élément. Ainsi, l'amortisseur est simple et peu coûteux à réaliser du fait de la standardisation des pièces.

Le premier dispositif de frottement comprend en outre une première rondelle de calage agencée axialement entre le premier élément et la première rondelle élastique. Ainsi, la première rondelle élastique est positionner de façon optimale et garde sa position dans le temps. En outre, elle permet d'optimiser la caractérisation de la charge de la première rondelle élastique.

Le deuxième dispositif de frottement comprend en outre une deuxième rondelle de calage agencée axialement entre le premier élément et la deuxième rondelle élastique, la première rondelle de calage et la deuxième rondelle de calage étant identiques et positionnées symétriquement par rapport au premier élément. Ainsi, la deuxième rondelle élastique est positionner de façon optimale et garde sa position dans le temps. De plus, l'amortisseur est simple et peu coûteux à réaliser du fait de la standardisation des pièces.

La première rondelle de frottement comprend uniquement deux portions de fixation, chaque portion de fixation étant reliée à la portion de frottement par un élément flexible. Ainsi, la présence d'uniquement deux portions de fixation permet à la première rondelle de frottement de posséder une raideur quasi nulle. En outre, la première rondelle de frottement est simple et peu coûteuse à réaliser.

Chaque portion de fixation est reliée à la portion de frottement par un unique élément flexible. Ainsi, la première rondelle de frottement est simple et peu coûteuse à réaliser.

La deuxième rondelle de frottement comprend uniquement deux portions de fixation, chaque portion de fixation étant reliée à la portion de frottement par un élément flexible. Ainsi, la présence d'uniquement deux portions de fixation permet à la deuxième rondelle de frottement de posséder une raideur quasi nulle. En outre, la deuxième rondelle de frottement est simple et peu coûteuse à réaliser.

Chaque portion de fixation est reliée à la portion de frottement par un unique élément flexible. Ainsi, la deuxième rondelle de frottement est simple et peu coûteuse à réaliser.

L'élément flexible est une patte flexible.

Les deux portions de fixation sont agencées à 180 degrés l'une de l'autre. Ainsi, la première et/ou la deuxième rondelle de frottement est simple et peu coûteuse à réaliser.

Les deux portions de fixation sont agencées entre 50 et 110 degrés l'une de l'autre. Les deux portions de fixation sont agencées de préférence à 90 degrés l'une de l'autre. Ainsi, la première et/ou la deuxième rondelle de frottement peut s'adapter à diverses contraintes ergonomiques de l'amortisseur tout en conservant une raideur quasi nulle.

La première rondelle de frottement comprend au moins trois portions de fixation, chaque portion de fixation étant reliée à la portion de frottement par un élément flexible comprenant au moins une partie ondulée présentant, radialement, une succession de zones axialement décalées deux à deux. Ainsi, la première rondelle de frottement est plus robuste tout en présentant une raideur quasi nulle.

La deuxième rondelle de frottement comprend au moins trois portions de fixation, chaque portion de fixation étant reliée à la portion de frottement par un élément flexible comprenant au moins une partie ondulée présentant, radialement, une succession de zones axialement décalées deux à deux. Ainsi, la deuxième rondelle de frottement est plus robuste tout en présentant une raideur quasi nulle.

Chaque portion de fixation étant reliée à la portion de frottement par un unique élément flexible. Ainsi, la première et/ou la deuxième rondelle de frottement est simple et peu coûteuse à réaliser.

Le premier élément comprend un organe annulaire tel qu'un disque ou une rondelle dont le centre est agencé sur l'axe X de rotation.

Chaque portion de fixation de la rondelle de frottement est fixée au premier élément ou au deuxième élément via un élément de support.

L'amortisseur de torsion est apte à transmettre le couple du moteur du véhicule aux roues motrices du véhicule.

Selon un mode de réalisation, le premier élément est destiné à être entrainé en rotation par le moteur du véhicule, et le deuxième élément est destiné à entrainer en rotation un organe d'entrée de boîte de vitesse du véhicule, tel qu'un arbre.

Selon une variante, le deuxième élément est destiné à être entrainé en rotation par le moteur du véhicule, et le premier élément est destiné à entrainer en rotation un organe d'entrée de boîte de vitesse du véhicule, tel qu'un arbre.

La première rondelle élastique est agencée axialement entre le premier élément et la portion de frottement de la première rondelle de frottement, pour presser axialement la portion de frottement de la première rondelle de frottement contre une surface de friction du deuxième élément.

Chaque portion de fixation est bloquée axialement sur le premier ou le deuxième élément.

Chaque portion de fixation est montée solidaire en rotation du premier ou du deuxième élément, sans jeu angulaire.

Notamment, le montage des portions de fixation n'est pas amovible de façon à éviter les jeux angulaires de montage. Autrement dit, les portions de fixation sont fixées de façon non amovible au premier ou au deuxième élément.

La portion de fixation est liée au premier ou au deuxième élément par une liaison encastrement telle qu'un rivetage ou un soudage. On entend par liaison encastrement, une liaison avec aucun degré de liberté.

Chaque premier ou deuxième élément et chaque portion de fixation comportent chacun au moins un orifice, chaque orifice de portion de fixation étant agencé au regard d'un orifice du premier ou deuxième élément, et chaque portion de fixation est fixée de façon rigide en rotation au premier ou deuxième élément correspondant au moyen d'au moins un élément de fixation, telle qu'un rivet ou une goupille.

Chaque portion de fixation est également bloquée axialement sur le premier ou deuxième élément grâce à l'élément de fixation.

Notamment, l'élément de fixation peut être un rivet comprenant un fût destiné à être engagé dans les orifices de la portion de fixation et du premier ou deuxième élément, et comprenant en outre à chaque extrémité une tête élargie par rapport au fût.

Les portions de fixation sont agencées radialement à l'extérieur des ressorts.

Les ressorts sont des ressorts hélicoïdaux qui s'étendent circonférentiellement ou tangentiellement autour de l'axe X sur un rayon d'implantation moyen, et les portions de fixation sont agencées radialement à l'extérieur du rayon d'implantation moyen.

Le rayon d'implantation moyen est pris au niveau de la zone médiane de la longueur d'un ressort, et au niveau de l'axe principal autour duquel les spires s'enroulent.

Chaque élément flexible est élastiquement déformable axialement.

La charge exercée par la première rondelle élastique est plus importante que la charge exercée par la ou les éléments flexibles de la première rondelle de frottement.

Chaque élément flexible présente une raideur axiale linéaire.

Chaque élément flexible est agencé circonférentiellement entre deux ressorts.

Le premier élément comprend des ouvertures pour loger les ressorts et un élément de support disposé circonférentiellement entre deux ouvertures voisines. Chaque élément flexible étant rigidement solidaire d'un élément de support du premier élément.

La portion de frottement est composée d'une pluralité de plaquettes de frottements distantes les unes des autres.

La portion de frottement est composée d'une unique plaquette de frottement circulaire.

Chaque portion de fixation est agencée pour recevoir un ou deux rivets.

Chaque portion de fixation est agencée circonférentiellement entre deux ressorts voisins.

Selon un mode de réalisation, la première rondelle de frottement est découpée dans une tôle.

Selon un mode de réalisation, la première rondelle de frottement est plane avant son montage dans l'amortisseur de torsion.

Le cas échéant, la déformation de la première rondelle de frottement lors de son montage permet de générer la charge axiale des éléments flexibles, notamment dans une direction opposée à la direction des efforts exercés par la première rondelle élastique.

Le deuxième élément comprend une première et une deuxième rondelles latérales montées solidaire en rotations autour de l'axe X et espacées axialement l'une de l'autre ; et le premier élément comprend un disque intermédiaire disposé axialement entre les deux rondelles latérales.

L'invention porte aussi sur un disque d'embrayage pour groupe motopropulseur de véhicule équipé d'un amortisseur tel que décrit précédemment et d'un disque de friction porté par le premier élément et doté de garnitures de friction.

Un moyeu est solidaire en rotation de la première et de la deuxième rondelle latérale. Autrement dit, le deuxième élément comprend ce moyeu.

Le moyeu est doté d'un collet de part et d'autre duquel la première et de la deuxième rondelle latérale vienne en butée axialement.

Le moyeu et les première et deuxième rondelles latérales sont rivetés ensemble.

Selon une première variante, notamment dépourvue de pré-amortisseur, le moyeu est un moyeu de sortie apte à entrainer un arbre d'entrée de boite de vitesse.

Selon une deuxième variante, le moyeu est un moyeu intermédiaire couplé avec un jeu angulaire avec un moyeu de sortie, et le disque d'embrayage comprend en outre un pré-amortisseur doté de ressorts de préamortissement disposés cinématiquement entre le moyeu de sortie et le deuxième élément.

Le disque d'embrayage comporte un moyeu de sortie entrainé en rotation directement ou indirectement (via un pré-amortisseur par exemple) par le premier élément.

Le disque de friction et la première rondelle de frottement sont fixés sur le premier élément avec les mêmes éléments de fixation, par exemple les mêmes rivets.

Le disque de friction, le premier élément (en particulier le disque central), le premier dispositif de frottement et le deuxième dispositif de frottement forment ensemble un sous-ensemble pré-monté apte à être inséré entre les première et deuxième rondelles latérales.

Ce sous-ensemble est monté sans blocage axial sur le moyeu.

### BREVE DESCRIPTION DES FIGURES

D'autres caractéristiques et avantages de l'invention ressortiront à la lecture de la description qui va suivre, en référence aux figures annexées et détaillées ci-après.
La figure 1 [Fig.1] est une vue partielle en perspective d'un disque d'embrayage selon l'invention comprenant une première rondelle de frottement selon un premier mode de réalisation.
La figure 2 [Fig.2] est une vue partielle en coupe de l'amortisseur de torsion du disque d'embrayage de la figure 1.
La figure 3 [Fig.3] est une vue de profil de la première rondelle de frottement selon un deuxième mode de réalisation.
La figure 4 [Fig.4] est un gros plan de la figure 3.

Pour plus de clarté, les éléments identiques ou similaires sont repérés par des signes de référence identiques sur l'ensemble des figures.

### DESCRIPTION DÉTAILLÉE DE MODES DE REALISATION

Naturellement, les modes de réalisation illustrés par les figures présentées ci-dessus ne sont donnés qu'à titre d'exemples non limitatif.

Dans la description et les revendications, on utilise les termes "externe" et "interne" ainsi que les orientations "axiale" et "radiale" pour désigner, selon les définitions données dans la description, des éléments de l'amortisseur. Par convention, l'orientation "radiale" est dirigée orthogonalement à l'axe de rotation X de l'amortisseur déterminant l'orientation "axiale" et, de l'intérieur vers l'extérieur en s'éloignant dudit axe de rotation, l'orientation "circonférentielle" est circulaire autour de l'axe X et l'orientation tangentielle est dirigée orthogonalement à l'axe de rotation de l'amortisseur et orthogonalement à la direction radiale. Les termes "externe" et "interne" sont utilisés pour définir la position relative d'un élément par rapport à un autre, par référence à l'axe X de rotation de l'amortisseur, un élément proche de l'axe est ainsi qualifié d'interne par opposition à un élément externe situé radialement en périphérie.

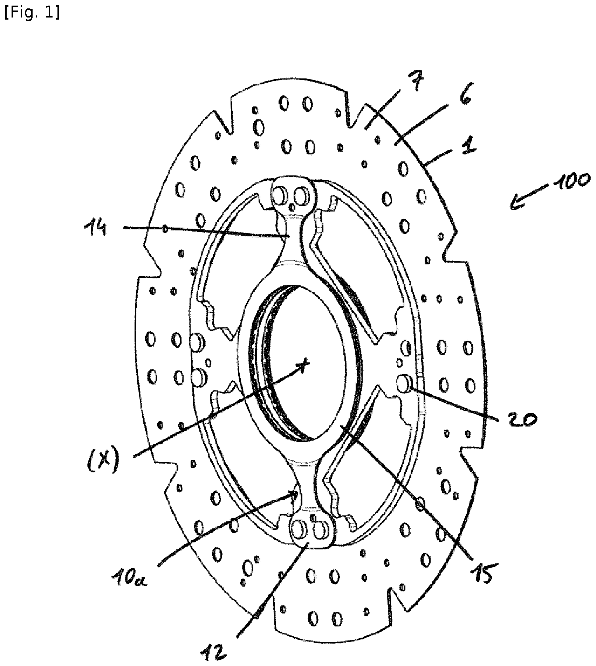

La figure 1 représente une vue en perspective d'un disque d'embrayage pour groupe motopropulseur de véhicule. Le disque d'embrayage est équipé d'un amortisseur 100 et d'un disque de friction 6 doté de garnitures de friction 7.

L'amortisseur de torsion 100 comprend un premier élément 1 apte à tourner autour d'un axe X de rotation, et un deuxième élément mobile en rotation par rapport au premier élément 1 selon l'axe X. Cet amortisseur de torsion 100 est apte à transmettre le couple du moteur du véhicule aux roues motrices du véhicule.

Des ressorts peuvent être montés entre le premier élément 1 et le deuxième élément, de façon à se comprimer pour autoriser une rotation relative selon l'axe X entre le premier élément 1 et le deuxième élément.

Le deuxième élément peut comprendre une première rondelle latérale et une deuxième rondelle latérale montées solidaire en rotations autour de l'axe X et espacées axialement l'une de l'autre. Le premier élément 1 peut comprendre un disque intermédiaire 1a disposé axialement entre les deux rondelles latérales.

Le disque de friction 6 peut être porté par le disque intermédiaire 1a à sa périphérie externe.

Le disque d'embrayage peut en outre comprendre un moyeu de sortie 40 entrainé en rotation indirectement, via un pré-amortisseur, par le deuxième élément, via la première rondelle latérale. Le moyeu de sortie 40 peut être couplé avec un jeu angulaire avec le deuxième élément. Le pré-amortisseur peut être doté de ressorts de pré amortisseur disposés cinématiquement entre le moyeu de sortie 40 et le deuxième élément.

Le moyeu de sortie 40 peut comprendre un collet de part et d'autre duquel la première rondelle latérale et la deuxième rondelle latérale viennent en butée axialement.

Le disque intermédiaire 1a peut comprendre un élément de support 13. Alternativement, la première rondelle latérale et la deuxième rondelle latérale peuvent comprendre un élément de support 13.

L'amortisseur 100 peut comprendre un premier dispositif de frottement 10a comprenant une première rondelle de frottement 11a. La première rondelle de frottement 11a peut être dotée de deux unique portion de fixation 12 fixée de façon rigide en rotation sur le premier élément 1 ou le deuxième élément. Plus particulièrement, chacune des deux portions de fixation 12 peut être fixée sur l'élément de support 13 du disque intermédiaire 1a Alternativement, chacune des deux portions de fixation 12 peut être fixée sur l'élément de support 13 de la première rondelle latérale ou la deuxième rondelle latérale.

La première rondelle de frottement 11a a une portion de frottement 15. La portion de frottement 15 peut présenter une piste de frottement 16 et une face dorsale 17.

Chacune des deux portions de fixation 12 de la première rondelle de frottement 11a peut être reliée à la portion de frottement 15 par un élément flexible 14 autorisant un déplacement axial de la face dorsale 17 par rapport au premier élément 1. Ainsi, on peut réaliser un blocage en rotation entre le premier élément et la première rondelle de frottement 11a, sans jeu angulaire, tout en autorisant un déplacement de la face dorsale 17 de la portion de frottement 15 par rapport au premier élément 1, ce qui permet de compenser les usures des surfaces de frottement.

L'élément flexible 14 peut être une patte flexible. Elle peut être formée d'un seul tenant avec la portion de frottement 15 et la portion de fixation 12. Ainsi, la première rondelle de frottement 11a est avantageusement fabriquée dans une unique tôle.

Chaque élément de support 13 et chaque portion de fixation 12 peuvent comprendre chacun au moins un orifice 21. Chaque orifice de portion de fixation 12 est agencé au regard d'un orifice d'élément de support 13.

Chaque portion de fixation 12 peut ainsi être fixée de façon rigide en rotation à l'élément de support correspondant 13 au moyen d'au moins un élément de fixation, telle qu'un rivet 20.

Chaque portion de fixation 12 est également bloquée axialement sur l'élément de support 13 grâce aux rivets 20.

La portion de frottement 15 est formée sur une partie radialement interne de la première rondelle de frottement 11a et chaque portion de fixation 12 est formée sur une partie radialement externe de la première rondelle de frottement 11a.

Comme on peut le voir sur les figures, le disque d'embrayage peut en outre comprendre des ressorts. Les ressorts peuvent être des ressorts hélicoïdaux qui s'étendent circonférentiellement ou tangentiellement autour de l'axe X sur un rayon d'implantation moyen. Les portions de fixation 12 sont agencées radialement à l'extérieur du rayon d'implantation moyen. Le rayon d'implantation moyen est pris au niveau de la zone médiane de la longueur d'un ressort, et au niveau de l'axe principal autour duquel les spires du ressort s'enroulent.

La première rondelle de frottement 11a peut comprendre deux unique portions de fixation 12 et le premier élément 1 ou le deuxième élément peut comprendre une pluralité d'éléments de supports 13, une partie des éléments de support 13 recevant une portion de fixation 12.

Chaque patte flexible 14 est élastiquement déformable axialement.

Le premier dispositif de frottement 10a peut en outre comprendre une première rondelle élastique 18a. La première rondelle élastique 18a peut être agencée axialement entre le premier élément 1 et la première rondelle de frottement 11a. Plus particulièrement, la première rondelle élastique 18a peut être agencée axialement entre le disque intermédiaire 1a et la face dorsale 17 de la portion de frottement 15.

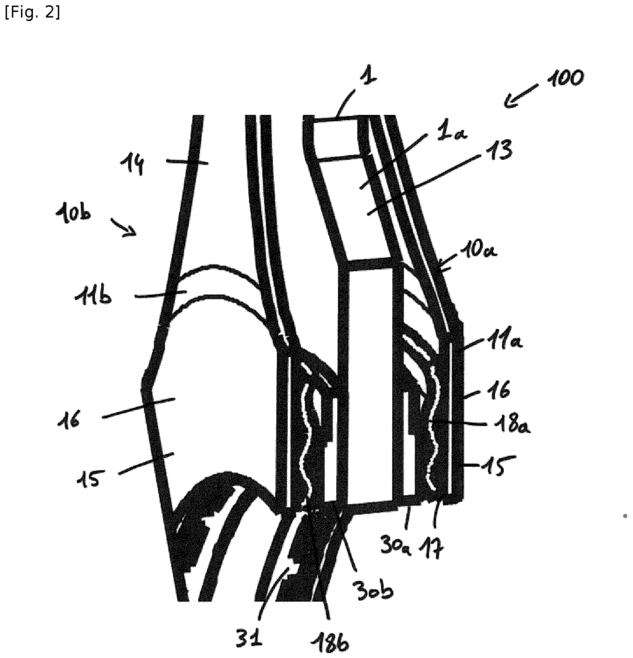

Comme illustré sur la figures 2, la première rondelle élastique 18a est agencée axialement entre le disque intermédiaire 1a et la face dorsale 17 de la portion de frottement 15 de la première rondelle de frottement 11a, pour presser axialement la portion de frottement 15 contre une surface de friction de la première rondelle latérale.

La première rondelle élastique 18a peut être d'une seule pièce. La première rondelle élastique 18a peut être continue et s'étendre circonférentiellement. La première rondelle élastique 18a peut présenter une forme ondulée. La forme ondulé présente, radialement, une succession de zones axialement décalées deux à deux.

Le premier dispositif de frottement 10a peut en outre comprendre une première rondelle de calage 30a. La première rondelle de calage 30a peut comprendre un corps principal continue et s'étendant circonférentiellement. La première rondelle de calage 30a peut comprendre une pluralité de pattes 31 s'étendant axialement depuis le corps principal. La pluralité de patte 31 peut être adaptée maintenir la première rondelle élastique 18a.

La première rondelle de calage 30a peut être agencée axialement entre le premier élément 1 et la première rondelle de frottement 11a. Plus particulièrement, la première rondelle de calage 30a peut être agencée axialement entre le premier élément 1 et la première rondelle élastique 18a.

Chaque patte flexible 14, la première rondelle élastique 18a et la première rondelle de calage 30a peuvent être configurées de sorte que, en fonctionnement, pour au moins un état de compression de la première rondelle élastique 18a, une charge axiale est exercée par chaque patte flexible 14 dans une direction opposée à la direction de la charge exercée par la première rondelle élastique 18a sur la portion de frottement 15.

Les pattes flexibles 14 et la première rondelle élastique 18a peuvent être configurées de sorte que la charge exercée par la première rondelle élastique 18a reste plus importante que la charge exercée par les pattes flexibles 14 de la première rondelle de frottement 11a.

De façon générale, l'état de compression de la première rondelle élastique 18a peut dépendre de la pré charge initiale de la première rondelle élastique 18a et de l'état d'usure du premier dispositif de frottement 10a.

Les deux uniques portions de fixation 12 peuvent être agencées à 180 degrés l'une de l'autre. Alternativement, les deux uniques portions de fixation peuvent être agencées entre 50 et 110 degrés l'une de l'autre, de préférence à 90 degrés l'une de l'autre.

On voit sur la figure 1 que chaque patte flexible 14 peut être agencée circonférentiellement entre deux ressorts. Le premier élément 1 peut comprendre des ouvertures pour loger les ressorts, et chaque élément de support 13 est disposé circonférentiellement entre deux ouvertures voisines.

La portion de frottement 15 peut être composée d'une plaque de frottement unique. La plaque de frottement peut s'étendre circulairement autour de l'axe X. La plaque de frottement peut être continue. Alternativement, la portion de frottement 15 peut être composée d'une pluralité de plaquettes de frottements distantes les unes des autres. Chaque plaquette de frottement 15 peut être associée à une seule patte flexible 14.

La portion de frottement 15 forme un anneau radialement interne de la première rondelle de frottement 11a qui s'étend autour d'axe X de rotation et se développe radialement.

La première rondelle de frottement 11a peut en outre comprendre un anneau radialement externe 23 et chaque patte flexible 14 relie la portion de frottement 15 et l'anneau radialement externe 23. L'anneau radialement externe 23 s'étend autour de l'axe X de rotation et se développe radialement.

Les portions de fixation 12, les pattes flexibles 14, la portion de frottement 15 et l'anneau radialement externe 23 peuvent être formés d'une seule pièce dans une tôle découpée.

Un espace peut être présent entre deux pattes flexibles 14 voisines, notamment pour autoriser la disposition d'un ressort. Autrement dit, les pattes flexibles 14 sont chacune agencées entre deux ressorts.

L'anneau radialement externe 23 est disposé contre un bord radialement externe du premier élément 1.

Chaque portion de fixation 12 peut être formée sur un évasement qui prolonge la patte flexible 14 et qui relie la patte flexible 14 à l'anneau radialement externe 23. Chaque portion de fixation 12 peut être agencée pour recevoir deux rivets 20.

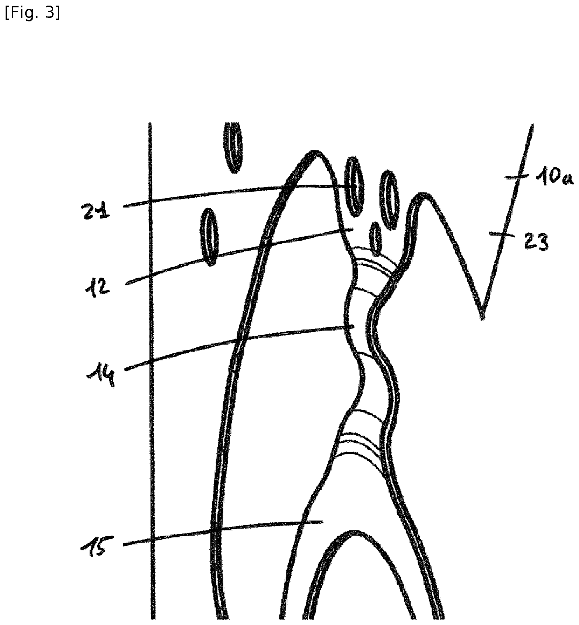

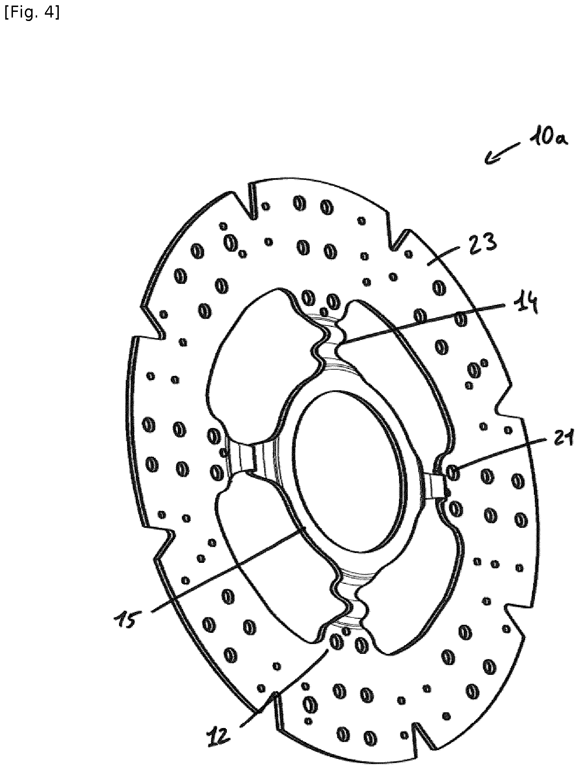

Selon un deuxième mode de réalisation de la première rondelle de frottement 11a, représenté sur les figures 3 et 4, la première rondelle de frottement peut comprendre une pluralité de portions de fixation 12. La pluralité est au moins trois portions de fixations 12. Chacune patte flexible 14 reliant les portions de fixation 12 à la portion de frottement 15 peut être ondulée. Chaque patte flexible 14 ondulée peut présenter, radialement, une succession de zones axialement décalées deux à deux.

L'amortisseur peut comprendre un nombre pair n de ressorts, par exemple quatre, intercalés circonférentiellement entre le disque intermédiaire 1a et le deuxième élément. La première rondelle de frottement 11a peut comprendre n portions de fixation 12, par exemple quatre, et n éléments flexibles, par exemple quatre. Ainsi, on peut avoir une première rondelle de frottement 11a avec moins de raideur axiale. Chaque portion de fixation 12 peut être agencée circonférentiellement entre deux ressorts voisins.

L'amortisseur 100 peut en outre comprendre un deuxième dispositif de frottement 10b. Le deuxième dispositif de frottement 10b peut être indépendant du premier dispositif de frottement 10a. Le deuxième dispositif de frottement 10b est adapté pour subir, indépendamment du premier dispositif de frottement 10a, les battements axiaux lié au passage du couple moteur. Le deuxième dispositif de frottement 10b comprenant une deuxième rondelle de frottement 11b. La deuxième rondelle de frottement 11b peut être identique à la première rondelle de frottement 11a. La première rondelle de frottement 11a et la deuxième rondelle de frottement 11b peuvent être positionnées en symétrie centrale l'une de l'autre par rapport au premier élément 1.

Le deuxième dispositif de frottement 10b peut en outre comprendre une deuxième rondelle élastique 18b. La deuxième rondelle élastique 18b peut être identique à la première rondelle élastique 18a. La première rondelle élastique 18a et la deuxième rondelle élastique 18b peuvent être positionnées en symétrie centrale l'une de l'autre par rapport au premier élément 1. La deuxième rondelle élastique 18b permet de plaquer axialement la deuxième rondelle de frottement 11b de façon indépendante par rapport à la première rondelle de frottement 11a.

Le deuxième dispositif de frottement 10b peut en outre comprendre une deuxième rondelle de calage 30b. La deuxième rondelle de calage 30b peut être identique à la première rondelle de calage 30a. La première rondelle de calage 30a et la deuxième rondelle de calage 30b peuvent être positionnées en symétrie centrale l'une de l'autre par rapport au premier élément 1.

La présence des deux dispositifs de frottement 10a et 10b, indépendants, identiques entre eux et positionnés en symétrie axiale par rapport au premier élément 1, permet de supprimer définitivement les problèmes de matage, augmentant ainsi la durée de vie de l'amortisseur 100.

## Revendications

1. Amortisseur de torsion (100), destiné à équiper un groupe motopropulseur de véhicule, l'amortisseur comprenant :
- un premier élément (1) mobile en rotation autour d'un axe (X) de rotation,
- un deuxième élément mobile en rotation par rapport au premier élément (1) selon l'axe (X) de rotation,
le deuxième élément comprenant une première rondelle latérale et une deuxième rondelle latérale montées solidaire en rotations autour de l'axe (X) et espacées axialement l'une de l'autre et le premier élément (1) comprenant un disque intermédiaire disposé axialement entre la première et la deuxième rondelle latérale,
- des ressorts montés entre le premier élément (1) et le deuxième élément de façon à se comprimer pour autoriser une rotation relative selon l'axe (X) entre le premier élément (1) et le deuxième élément,
- un premier dispositif de frottement (10a) comprenant une première rondelle de frottement (11a) dotée d'au moins une portion de fixation (12) fixée de façon rigide en rotation sur le premier élément (1) ou sur le deuxième élément, la première rondelle de frottement (11a) ayant une portion de frottement (15) agencé entre la première rondelle latérale et le premier élément (1); et une première rondelle élastique (18a) agencée axialement entre le premier élément (1) et la portion de frottement (15) de la première rondelle de frottement,
- un deuxième dispositif de frottement (10b) comprenant une deuxième rondelle de frottement (11b) dotée d'au moins une portion de fixation (12) fixée de façon rigide en rotation sur le premier élément (1) ou sur le deuxième élément, la deuxième rondelle de frottement (11b) ayant une portion de frottement (15) agencé entre la deuxième rondelle latérale et le premier élément (1); et une deuxième rondelle élastique (18b) agencée axialement entre le premier élément (1) et la portion de frottement (15) de la deuxième rondelle de frottement.

2. Amortisseur de torsion (100) selon la revendication 1 dans lequel la première rondelle de frottement (11a) et la deuxième rondelle de frottement (11b) sont identiques et positionnées symétriquement par rapport au premier élément (1).

3. Amortisseur de torsion (100) selon l'une quelconques des revendications précédentes dans lequel la première rondelle élastique (18a) et la deuxième rondelle élastique (18b) sont identiques et positionnées symétriquement par rapport au premier élément (1).

4. Amortisseur de torsion (100) selon l'une quelconques des revendications précédentes dans lequel le premier dispositif de frottement (10a) comprend en outre une première rondelle de calage (30a) agencée axialement entre le premier élément (1) et la première rondelle élastique (18a).

5. Amortisseur de torsion (100) selon la revendication précédente dans lequel le deuxième dispositif de frottement (10b) comprend en outre une deuxième rondelle de calage (30b) agencée axialement entre le premier élément (1) et la deuxième rondelle élastique (18b), la première rondelle de calage (30a) et la deuxième rondelle de calage (30b) étant identiques et positionnées symétriquement par rapport au premier élément (1).

6. Amortisseur de torsion (100) selon l'une quelconques des revendications précédentes dans lequel la première rondelle de frottement comprend uniquement deux portions de fixation (12), chaque portion de fixation (12) étant reliée à la portion de frottement (15) par un élément flexible (14).

7. Amortisseur de torsion (100) selon la revendication précédente, dans lequel les deux portions de fixation (12) sont agencées à 180 degrés l'une de l'autre.

8. Amortisseur de torsion (100) selon la revendication 6, dans lequel les deux portions de fixation (12) sont agencées entre 50 et 110 degrés l'une de l'autre, de préférence à 90 degrés l'une de l'autre.

9. Amortisseur de torsion (100) selon l'une quelconques des revendications 1 à 5 dans lequel la première rondelle de frottement comprend au moins trois portions de fixation (12), chaque portion de fixation (12) étant reliée à la portion de frottement (15) par un élément flexible (14) comprenant au moins une partie ondulée présentant, radialement, une succession de zones axialement décalées deux à deux.

10. Amortisseur de torsion (100) selon l'une quelconques des revendications 1 à 5 dans lequel chaque portion de fixation (12) est reliée à la portion de frottement (15) par un élément flexible (14) autorisant un déplacement axial de la portion de frottement (15) par rapport à l'élément de support (13) du premier élément (1).

11. Disque d'embrayage pour groupe motopropulseur de véhicule équipé d'un amortisseur selon l'une des revendications précédentes et d'un disque de friction (6) porté par le premier élément (1) et doté de garnitures de friction (7),
